Europäisches Patentamt

European Patent Office

Office européen des brevets

(19)

(11) Numéro de publication : **0 041 461**
**B1**

(12) **FASCICULE DE BREVET EUROPÉEN**

(45) Date de publication du fascicule du brevet :
29.02.84

(21) Numéro de dépôt : **81400885.0**

(22) Date de dépôt : **03.06.81**

(51) Int. Cl.³ : **A 01 C   5/06**, A 01 C   7/04

(54) Procédé de mise en terre des graines dans les semis dits de précision et dispositif pour sa mise en oeuvre.

(30) Priorité : **03.06.80 FR 8012283**

(43) Date de publication de la demande :
**09.12.81 Bulletin 81/49**

(45) Mention de la délivrance du brevet :
**29.02.84 Bulletin 84/09**

(84) Etats contractants désignés :
**AT BE CH DE GB IT LI LU NL SE**

(56) Documents cités :
**WO-A-81 /010 93**
**US-A- 4 009 668**

(73) Titulaire : **Société SOGEFINA Société de Gestion Financière Armoricaine (Société Anonyme)**
**49-51, rue de Ponthieu**
**F-75008 Paris (FR)**

(72) Inventeur : **Herriau, Paul**
**Rue Lucien Sampaix**
**Proville F-59400 Cambrai (FR)**

(74) Mandataire : **Lemonnier, André**
**Cabinet LEMONNIER 4, Boulevard Saint-Denis**
**F-75010 Paris (FR)**

Procédé de mise en terre des graines dans les semis dits de précision et dispositif pour sa mise en œuvre

La présente invention concerne un procédé de mise en terre des graines destiné principalement aux semis dits de précision lesquels doivent assurer une mise en place précise de la graine dans le sillon.

Actuellement, dans la plupart des semoirs monograines utilisés pour les semis de précision, soit la graine tombe par gravité dans le sillon à la sortie du dispositif de distribution, soit la graine est transportée par un courant de fluide dans un tube flexible jusqu'au niveau du soc traçant le sillon. Dans tous les cas, la graine arrive dans le sillon avec une vitesse notable. Il y a donc risque de rebondissement et de roulement des graines, ce qui, malgré le fait que les semoirs de précision permettent d'assurer une assez bonne constance de l'écart entre les graines distribuées à la sortie du semoir, entraîne une dispersion importante des graines de part et d'autre de l'axe du sillon et des variations dans les écartements.

Or, pour obtenir des rendements élevés et faciliter les façons culturales ultérieures, il est nécessaire que les graines telles que les graines de betteraves, de maïs, de blé ou similaires soient semées selon une ligne parfaite et avec un écartement régulier.

La présente invention a donc pour but de remédier aux inconvénients ci-dessus en fournissant un procédé de mise en terre des graines qui permet de supprimer la dispersion des graines autour du point de semis théorique.

Dans la demande de brevet FR-A-2 478 942 du 31 Mars 1980, on a proposé de projeter la graine, à la sortie du tube de distribution du semoir, vers le sommet du dièdre que forme la surface périphérique avant de la roue de plombage avec le fond du sillon. Avec ce procédé la graine est prise entre la roue de plombage et le sol au fond du sillon et enfoncée dans ce dernier. On obtient d'excellents résultats mais certaines graines ne nécessitent pas un plombage ou doivent être recouvertes par une couche de terre d'épaisseur déterminée avec ou sans plombage.

La présente invention a pour but de proposer un procédé de mise en terre des graines dans les semis dits de précision dans lequel les graines sont recouvertes par une couche de terre, l'écartement régulier des graines, obtenu au niveau de la distribution, étant conservé dans le semis.

Le brevet US-A-4.009.668 décrit un semoir dans lequel la graine tombe dans un sillon en V dont les bords sont compactés, la graine étant, très en aval de son point de dépôt, recouverte par une couche de terre. Ce brevet précise que la graine doit être déposée dans le sillon à vitesse nulle. Cette nécessité s'explique par le fait que la graine n'est pas emprisonnée positivement dès son contact avec le sol et que si elle était projetée comme dans les semoirs à transport pneumatique, elle roulerait dans le sillon.

On a également proposé dans le brevet FR-A-1 229 027 d'ouvrir un sillon en avant de l'orifice de sortie du distributeur dirigé vers l'arrière, ce sillon formant à l'arrière du soc une paroi d'éboulement transversale qui progresse au fur et à mesure de l'avancement du soc et de projeter la graine dans l'angle que forme cette paroi avec le fond du sillon. Toutefois la paroi d'éboulement naturelle se trouve à une distance incontrôlée en arrière du soc et, comme cela est bien connu, l'angle formé avec le fond du sillon est l'angle du talus d'éboulement, c'est-à-dire un angle obtu contre la face inclinée duquel la graine est susceptible de rebondir. La graine n'est donc pas emprisonnée positivement dès sa sortie du distributeur.

Pour y remédier et conformément à l'invention on referme le sillon en repoussant mécaniquement la terre dans celui-ci de manière que ledit sillon commence à être refermé à une courte distance en amont de l'orifice de sortie du canal d'amenée du distributeur, la terre étant ramenée au-dessus de la paroi supérieure de l'extrémité de sortie de ce canal en formant une poche concave en aval et en face dudit orifice de sortie.

Avec le procédé on crée positivement en face de l'orifice de sortie du canal d'amenée des graines un logement concave en forme de poche au fond duquel la graine est projetée, la graine se trouvant ainsi enterrée au droit de la position du fond de la poche au moment de son éjection.

Le dispositif pour la mise en œuvre du procédé de mise en terre conforme à l'invention, comporte un soc ouvrant le sillon en rejetant la terre de préférence sur l'un des côtés, un canal d'amenée des graines depuis le distributeur dans ledit sillon débouchant en arrière du soc dans le sillon ouvert par celui-ci, et au moins un élément comblant le sillon ouvert par le soc, et il est caractérisé en ce que l'élément comblant le sillon est rapproché du soc de manière que le talus d'éboulement créé par celui-ci recoupe le tracé du canal d'amenée des graines dans le sillon à une courte distance en amont de l'orifice de sortie dudit canal d'amenée, la terre étant ramenée au-dessus de la paroi supérieure de l'extrémité de sortie de ce canal. De préférence le canal d'amenée des graines dans le sillon se termine par une partie d'extrémité horizontale engagée dans la section du sillon, partie dont au moins l'extrémité supérieure arrière est recouverte par le talus d'éboulement de la terre ramenée par l'élément comblant le sillon. L'élément comblant le sillon en ramenant la terre déplacée par le soc peut être constitué par une rasette oblique, une paire de rasettes en V, un ou des disques obliques, une roue à jante concave ou même un canal d'amenée d'un mélange d'apport à base par exemple de terreau, d'humus et/ou d'engrais dans le cas d'une culture en terrain stérile.

Selon une autre caractéristique applicable au cas où le distributeur de graines est du type à transport pneumatique, le canal d'amenée comporte dans sa partie terminale une partie en arc de cercle tangeantant le fond du sillon, un orifice de sortie d'air étant prévu dans la paroi interne de la partie en arc de cercle du canal, au-dessus du niveau de la terre remblayée par l'élément comblant le sillon.

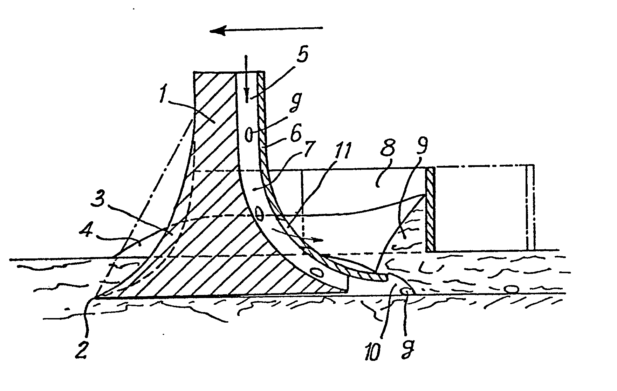

D'autres caractéristiques de l'invention apparaîtront à la lecture de la description d'un mode de réalisation du dispositif de mise en terre de graines conforme à l'invention faite ci-après avec référence au dessin ci-annexé qui représente une vue en coupe par le plan central vertical longitudinal du dispositif.

Le soc 1 comporte la partie avant formant soc proprement dit avec une arête horizontale inférieure 2 et une partie 3 formant versoir pour déverser sur un côté sous forme d'un billon 4 la terre de sillon. Le soc a une épaisseur égale à la largeur du sillon et dans sa face arrière est réalisé un canal 5 relié au dispositif d'amenée pneumatique des graines distribuées. Pour la facilité de la réalisation, le canal 5 peut avoir une section semi-circulaire et être fermé par une tôle rapportée 6. La partie inférieure 7 du canal 5 est sensiblement en quart de cercle de façon que la génératrice au fond de la gorge vienne sensiblement tangenter le fond du sillon. Avec cette disposition la graine g, quelle que soit sa position dans la section du canal 5, est amenée par la force centrifuge à glisser contre la génératrice de fond du canal et elle est projetée à l'extrémité de sortie du canal parallèlement au fond du sillon.

Sur le côté du soc est fixée une plaque verticale 8 formant rasette qui est prolongée transversalement en oblique au-dessus du sillon, les parties venant en avant du plan de la figure étant représentées en traits mixtes. Cette rasette 8 repousse le billon 4 pour combler le sillon. La tôle 6 est prolongée au-delà de l'extrémité arrière du soc de sorte qu'elle retient le talus d'éboulement 9 de manière à maintenir une poche concave 10 en face du débouché de la partie 7 du canal 5. La graine g est donc projetée au fond de cette poche qui se trouve toujours à une distance pratiquement constante de l'extrémité de la tôle 6 et elle est immobilisée par l'éboulement de la terre.

En pratique les graines sont amenées du distributeur au soc, dans le canal 5, par un courant d'air sous pression. Le flux d'air doit être évacué du canal d'amenée pour ne pas « souffler » la poche 10 et cela se fait avantageusement en un point où la graine peut être soustraite à l'influence du courant d'air du fait qu'elle est plaquée par la force d'inertie contre la génératrice du fond de la gorge. L'évacuation est réalisée par une fenêtre 11 dans la plaque 6.

## Revendications

1. Un procédé de mise en terre des graines dans les semis dits de précision dans lequel les graines sont projetées par un canal d'amenée conduisant les graines depuis le distributeur dans un sillon ouvert en avant de l'orifice de sortie dudit canal d'amenée des graines, lequel orifice est dirigé vers l'arrière, les graines étant recouvertes par une couche de terre ramenée dans le sillon, caractérisé en ce qu'on referme le sillon en repoussant mécaniquement la terre dans celui-ci de manière que ledit sillon commence à être refermé à une courte distance en amont de l'orifice de sortie du canal d'amenée du distributeur, la terre étant ramenée au-dessus de la paroi supérieure de l'extrémité de sortie de ce canal, en formant une poche concave en aval et en face dudit orifice de sortie.

2. Un dispositif pour la mise en œuvre du procédé selon la revendication 1 comportant un soc (1) ouvrant le sillon en rejetant la terre (4) de préférence sur l'un des côtés, un canal (5) d'amenée des graines depuis le distributeur dans ledit sillon débouchant en arrière du soc (1) dans le sillon ouvert par celui-ci et au moins un élément (8) comblant le sillon ouvert par le soc, caractérisé en ce que l'élément (8) comblant le sillon est rapproché du soc (1) de manière que le talus d'éboulement (9) créé par celui-ci recoupe le tracé du canal (5) d'amenée des graines dans le sillon à une courte distance en amont de l'orifice de sortie dudit canal d'amenée, la terre étant ramenée au-dessus de la paroi supérieure (6) de l'extrémité de sortie de ce canal.

3. Un dispositif selon la revendication 2, caractérisé en ce que le canal (5) d'amenée des graines dans le sillon se termine par une partie d'extrémité horizontale engagée dans la section du sillon, partie dont au moins l'extrémité supérieure arrière (6) est recouverte par le talus d'éboulement (9) de la terre ramenée par l'élément comblant le sillon.

4. Un dispositif selon la revendication 3, caractérisé en ce que l'élément (8) comblant le sillon en ramenant la terre déplacée par le soc est constitué par une rasette oblique, une paire de rasettes en V, un ou des disques obliques, une roue à jante concave ou même un canal d'amenée d'un mélange d'apport à base par exemple de terreau, d'humus et/ou d'engrais dans le cas d'une culture en terrain stérile.

5. Un dispositif selon l'une quelconque des revendications 2 à 4 appliqué à un distributeur de graines du type à transport pneumatique, caractérisé en ce que le canal d'amenée (5) comporte dans sa partie terminale une partie (7) en arc de cercle tangeantant le fond du sillon, un orifice de sortie d'air (11) étant prévu dans la paroi interne de la partie en arc de cercle du canal, au-dessus du niveau de la terre remblayée par l'élément (8).

## Claims

1. A method for digging seeds into the ground in so-called precision sowing, wherein the seeds are propelled by a feed channel forwarding the seeds from the distributor into a furrow opened in front of an outlet opening of said seed feed channel, said opening being directed rearwardly, the seeds being covered by a layer of earth brought back in the furrow, characterized in that the furrow is closed back by mechanically pushing back the earth in the latter so that said furrow begins to be closed back at a short distance upstream of the distributor feed channel outlet opening, the earth being brought back above the upper wall of the outlet end of said channel, by forming a concave pocket downstream and facing said outlet opening.

2. A device for practicing the method according to claim 1, comprising a drill coulter (1) opening the furrow by rejecting the earth (4) preferably on one of the sides, a seed feed channel (5) which extends from the distributor into said furrow opening at the rear of the drill coulter (1) into the furrow opened by the latter and at least one element (8) filling up the furrow opened by the drill coulter, characterized in that the element (8) which fills up the furrow is positioned near the drill coulter (1) such that the natural slope (9) created by the latter intersects the layout of the channel (5) feeding the seeds into the furrow at a short distance upstream of the outlet opening of said feed channel, the earth being brought back above the upper wall (6) of said channel outlet end.

3. A device according to claim 2, characterized in that the channel (5) feeding the seeds into the furrow ends into a horizontal end portion engaged into the furrow section, which portion has its rear upper end (6) covered by the natural slope (9) of the earth brought back by the element which is filling up the furrow.

4. A device according to claim 3, characterized in that the element (8) which is filling the furrow by bringing back the earth displaced by the drill coulter is formed of an oblique skim coulter, a pair of V-shaped skim coulters, one or several oblique discs, a concave rim wheel or even a feed channel of an added mixture based for example on compost, vegetable mould and/or manure when the cultivation is done on an unproductive land.

5. A device according to any one of claims 2 to 4, applied to a seed distributor of the pneumatic transportation type, characterized in that the channel (5) comprises in its end portion a portion (7) in the shape of an arc of a circle tangent the furrow bottom, an air outlet opening (11) being provided in the inner wall of the channel portion in the shape of an arc of a circle, above the level of the eart backfilled by element (8).

**Ansprüche**

1. Verfahren zum Einbringen von Samenkorn in Präzisions-Samenbeete im Erdreich, bei welchem das Samenkorn durch einen Führungskanal hindurchgeschleudert wird, der das Samenkorn von einem Verteiler in eine vor der Ausgangsöffnung dieses Kanales liegenden offenen Ackerfurche transportiert, wobei diese Ausgangsöffnung nach hinten gerichtet ist und das Samenkorn von einer Erdschicht in der Ackerfurche wieder abgedeckt wird, dadurch gekennzeichnet, daß man die Ackerfurche durch mechanisches Zurückschieben der Erde in die Ackerfurche derart schließt, daß die Ackerfurche in einem kurzen Abstand stromauf der Ausgangsöffnung des Führungskanales des Verteilers beginnt, geschlossen zu werden und daß die Erde oberhalb der oberen Wand des äußeren Ausgangsendes des Kanals dadurch zurückgebracht wird, daß stromab und gegenüber der Ausgangsöffnung eine konkave Tasche gebildet wird.

2. Vorrichtung zur Durchführung des Verfahrens nach Anspruch 1, mit einer Pflugschar (1), welche die Ackerfurche dadurch öffnet, daß sie die Erde (4) vorzugsweise auf eine der Seiten zurückwirft, wobei ein vom Verteiler ausgehender Führungskanal (5) für das Samenkorn vorgesehen ist, welcher hinter der Pflugschar (1) in die von ihr geöffnete Ackerfurche einmündet und zumindest ein Element (8) vorgesehen ist, welches die von der Pflugschar (1) aufgerissene Ackerfurche zuschüttet, dadurch gekennzeichnet, daß das Element (8), welches die Ackerfurche zuschüttet, an die Pflugschar (1) so angenähert ist, daß die Einsturzböschung, welche durch dieses Element geschaffen ist, den Umriß des Führungskanales (5) für das Samenkorn in der Ackerfurche in kurzem Abstand stromauf der Ausgangsöffnung des Führungskanales (5) schneidet und daß das Erdreich oberhalb der oberen Wand (6) des äußeren Ausgangsendes dieses Führungskanales zurückgebracht wird.

3. Vorrichtung nach Anspruch 2, dadurch gekennzeichnet, daß der Führungskanal (5) für das Samenkorn in der Ackerfurche in einem Teil endet, dessen äußeres, waagerechte Ende in den Querschnitt der Ackerfurche eingreift, wobei dieser Teil zumindest an seinem oberen, hinteren Ende (6) von der Einsturzböschung (9) mit derjenigen Erde wieder bedeckt wird, welche von dem die Ackerfurche zuschüttenden Element zurückgebracht wird.

4. Vorrichtung nach Anspruch 3, dadurch gekennzeichnet, daß das Element (8), welches die Ackerfurche durch Zurückbringen der von der Pflugschar (1) verschobenen Erde aufschüttet, von einem schrägen Vorschäler, einem Paar in V-Form angeordneten Vorschälern, einer oder mehreren schrägen Scheiben, einem konkaven Felgenrad oder sogar einem Führungskanal zum Transport einer Einlagemischung auf der Basis beispielsweise von Düngererde, Humus und/oder Dünger im Falle einer Kultur auf sterilem Terrain gebildet ist.

5. Vorrichtung nach einem der Ansprüche 2 bis 4 in Verbindung mit einem Verteiler, bei welchem das Samenkorn auf pneumatischem Wege transportiert wird, dadurch gekennzeichnet, daß der Führungskanal (5) an seinem Ende einen kreisbogenförmigen Teil (7) aufweist, der die Sohle der Ackerfurche berührt und daß in der Innenwand des kreisbogenförmigen Teiles des Kanales oberhalb des Niveaus des von dem Element (8) aufgeschütteten Erdreiches eine Luft-Austrittsöffnung (11) vorgesehen ist.

1